# EUROPÄISCHE PATENTSCHRIFT

(11) **EP 1 278 259 B1**
(45) Veröffentlichungstag und Bekanntmachung des Hinweises auf die Patenterteilung: **08.09.2010**
(21) Anmeldenummer: 02015831.7
(22) Anmeldetag: 16.07.2002
(51) Int. Cl.: H01M 8/10, H01M 8/02

(54) **Brennstoffzelleneinheit**
Fuel cell unit
Unité de pile à combustible

(30) Priorität: 19.07.2001 DE 10135333
(43) Veröffentlichungstag der Anmeldung: 22.01.2003
(73) Patentinhaber: ElringKlinger AG, 72581 Dettingen (DE); Deutsches Zentrum für Luft- und Raumfahrt e.V., 51147 Köln (DE)
(72) Erfinder: Diez, Armin, 73252 Lenningen (DE); Lang, Michael, Dr., 73079 Süssen (DE)
(74) Vertreter: Hoeger, Stellrecht & Partner Patentanwälte

(56) Entgegenhaltungen:
- EP-A- 0 387 643
- EP-A- 0 425 939
- EP-A- 0 907 215
- WO-A-98/33225
- DE-C- 4 119 910
- US-A- 3 960 598

## Beschreibung

Die vorliegende Erfindung betrifft eine Brennstoffzelleneinheit, die ein Gehäuse, ein Substrat und eine auf einer Elektrodenseite des Substrats angeordnete Elektrode umfaßt, wobei das Substrat so ausgebildet ist, daß es den Durchtritt eines Gases aus einem auf einer Gasraumseite des Substrats angeordneten Gasraum zu der Elektrode erlaubt.

Solche Brennstoffzelleneinheiten sind aus dem Stand der Technik bekannt.

In der Regel werden mehrere solcher Brennstoffzelleneinheiten zu einem Brennstoffzellenblockverbund zusammengefaßt, in welchem die Brennstoffzelleneinheiten längs einer Stapelrichtung aufeinander folgen.

Die auf der Elektrodenseite des Substrats angeordnete Elektrode bildet einen Bestandteil einer Kathoden-Anoden-Elektrolyt-Einheit, in welcher im Betrieb der Brennstoffzelleneinheit eine elektrochemische Reaktion abläuft, in deren Verlauf an der Anode der KAE-Einheit Elektronen freigesetzt werden und diese der Kathode der KAE-Einheit zur Ionisierung von Sauerstoffatomen über einen äußeren Stromkreis zugeführt werden. Zwischen den KAE-Einheiten zweier aufeinanderfolgender Brennstoffzelleneinheiten angeordnete Kontaktplatten dienen dem Ladungsausgleich zwischen der Kathode der einen Brennstoffzelleneinheit und der Anode der benachbarten Brennstoffzelleneinheit, um der Kathode die zur Ionisierung benötigten Elektronen zuzuführen. Von randständigen Kontaktplatten des Brennstoffzellenblockverbunds können elektrische Ladungen abgegriffen werden, um sie einem externen Nutz-Stromkreislauf zuzuführen.

Ein schwieriges Problem bei der Herstellung solcher Brennstoffzelleneinheiten besteht in der Schaffung einer gasdichten Abdichtung zwischen dem auf der Gasraumseite des Substrats angeordneten Gasraum, beispielsweise einem Brenngasraum, und einem der auf dem Substrat abgewandten Seite der Elektrode angeordneten weiteren Gasraum, beispielsweise einem Oxidationsmittelraum.

Die US-A-3 960 598 offenbart eine Brennstoffzelleneinheit mit den Merkmalen des Oberbegriffs von Anspruch 1.

Der vorliegenden Erfindung liegt die Aufgabe zugrunde, eine Brennstoffzelleneinheit der eingangs genannten Art zu schaffen, bei welcher der auf der Gasraumseite des Substrats angeordnete Gasraum in einfacher und zuverlässiger Weise gegenüber einem weiteren Gasraum gasdicht abgedichtet ist.

Diese Aufgabe wird bei einer Brennstoffzelleneinheit mit den Merkmalen des Oberbegriffs von Anspruch 1 erfindungsgemäß dadurch gelöst, dass das Substrat eine im wesentlichen gasdichte Zone umfasst, welche sich von einer Oberfläche des Substrats durch das Substrat hindurch zu einer gegenüberliegenden Oberfläche des Substrats erstreckt und durch Schweißen und/oder durch Löten an dem Gehäuse festgelegt ist.

Der erfindungsgemäßen Lösung liegt somit das Konzept zugrunde, einen Teilbereich des ansonsten gasdurchlässigen Substrats so auszugestalten, dass er eine im wesentlichen gasdichte Barriere bildet, welche als Bestandteil der den auf der Gasraumseite des Substrats angeordneten Gasraum von einem weiteren Gasraum abtrennenden Abdichtung dienen kann.

Bei einer bevorzugten Ausgestaltung der Erfindung ist vorgesehen, dass die gasdichte Zone des Substrats gasdicht an das Gehäuse der Brennstoffzelleneinheit angrenzt. Auf diese Weise kann auf ein zusätzliches Dichtelement verzichtet werden, das sonst einen Dichtspalt zwischen dem Substrat und dem Gehäuse abdichten müsste.

Insbesondere kann vorgesehen sein, dass das Gehäuse ein Blechformteil umfasst und dass die gasdichte Zone des Substrats an das Blechformteil angrenzt. Ein solches Blechformteil kann durch einen oder mehrere Umformvorgänge, insbesondere durch Prägen und/oder Tiefziehen, aus einem im wesentlichen ebenen Blechzuschnitt hergestellt werden. Dieses Herstellungsverfahren ist kostengünstig und für eine Großserienproduktion geeignet.

Das Blechformteil kann beispielsweise ein Fluidführungselement der Brennstoffzelleneinheit bilden, welches der Führung eines Brenngases oder eines gasförmigen Oxidationsmittels durch die Brennstoffzelleneinheit dient.

Alternativ oder ergänzend hierzu kann auch vorgesehen sein, dass das Gehäuse spanend bearbeitete Gehäuseteile umfasst.

Die gasdichte Zone des Substrats erfüllt neben einer Abdichtfunktion zusätzlich eine mechanische Haltefunktion, da die gasdichte Zone des Substrats an dem Gehäuse festgelegt ist.

Um die gasdichte Zone in einfacher und zuverlässiger Weise gasdicht mit dem Gehäuse zu verbinden, ist vorgesehen, dass die gasdichte Zone des Substrats durch Schweißen, vorzugsweise durch Laserschweißen, und/oder durch Löten, vorzugsweise durch Hartlöten, an dem Gehäuse festgelegt ist.

Ferner kann vorgesehen sein, daß die gasdichte Zone des Substrats beim Vorgang des Veschweißens und/oder des Verlötens mit dem Gehäuse gebildet wird.

Um die Abdichtung des auf der Gasraumseite des Substrats angeordneten Gasraums gegenüber dem weiteren Gasraum zu vervollständigen, kann vorgesehen sein, daß die Brennstoffzelleneinheit einen über der Elektrode angeordneten im wesentlichen gasdichten Elektrolyten umfaßt und daß die gasdichte Zone des Substrats auf ihrer dem Gehäuse gegenüberliegenden Seite gasdicht an den Elektrolyten angrenzt. Auf diese Weise erfüllt der Elektrolyt außer seiner elektrochemischen Funktion als Bestandteil der KAE-Einheit zusätzlich eine Abdichtfunktion, so daß auf ein zusätzliches Dichtelement auf der dem Gehäuse gegenüberliegenden Seite des Substrats verzichtet werden kann, was die Herstellung der Brennstoffzelleneinheit vereinfacht.

Um eine besonders dichte und zuverlässige Abdichtung des auf der Gasraumseite des Substrats angeordneten Gasraums gegenüber dem weiteren Gasraum zu erzielen, kann vorgesehen sein, daß die Brennstoffzelleneinheit einen Dichtungsbereich aus einer Vergußmasse umfaßt, welcher sowohl an den sich bis zur gasdichten Zone des Substrats erstreckenden Elektrolyten als auch an das Substrat gasdicht angrenzt und somit den äußeren Rand des Elektrolyten gasdicht überdeckt.

Eine solche Vergußmasse kann beispielsweise ein Glaslot, ein Metallot oder eine anorganische Paste, die während der Herstellung der Brennstoffzelleneinheit oder im Betrieb der Brennstoffzelleneinheit aushärtet, umfassen.

Ein als Vergußmasse verwendbares Glaslot kann beispielsweise wie ein aus der EP 0 907 215 A1 bekanntes Glaslot zusammengesetzt sein, d.h. 11 bis 13 Gewichts-% Aluminiumoxid (Al₂O₃), 10 bis 14 Gewichts-% Boroxid (BO₂), etwa 5 Gewichts-% Kalziumoxid (CaO), 23 bis 26 Gewichts-% Bariumoxid (BaO) und etwa 50 Gewichts-% Siliciumoxid (SiO₂) enthalten.

Alternativ oder ergänzend zu einem bis zu der gasdichten Zone des Substrats geführten Elektrolyten kann auch vorgesehen sein, daß die Brennstoffzelleneinheit einen über der Elektrode angeordneten im wesentlichen gasdichten Elektrolyten umfaßt und daß die Brennstoffzelleneinheit ferner einen Dichtungsbereich umfaßt, welcher gasdicht an den Elektrolyten und gasdicht an die gasdichte Zone des Substrats auf deren dem Gehäuse gegenüberliegender Seite angrenzt.

Insbesondere kann ein solcher Dichtungsbereich eine im wesentlichen gasdichte Vergußmasse, beispielsweise ein Glaslot, ein Metallot oder eine während der Herstellung oder während des Betriebes der Brennstoffzelleneinheit aushärtende anorganische Paste umfassen.

Die Herstellung der gasdichten Zone in dem Substrat wird erheblich erleichtert, wenn die gasdichte Zone in einem vorverdichteten Bereich des Substrats ausgebildet ist. Ein solcher Bereich weist eine verringerte Porosität auf, so daß die noch vorhandenen Poren und Durchgangskanäle in einfacher Weise, beispielsweise durch Verschweißen oder Verlöten, verschlossen werden können.

Um eine sich rings um das Substrat erstreckende Abdichtung zwischen dem auf der Gasraumseite des Substrats angeordneten Gasraum und dem weiteren Gasraum bilden zu können, ist die gasdichte Zone vorzugsweise ringförmig geschlossen ausgebildet.

Insbesondere kann vorgesehen sein, daß die gasdichte Zone des Substrats einen gasdurchlässigen Bereich des Substrats umschließt.

Um einen möglichst großen Bereich des Substrats für den Durchtritt von Gas zu der auf der Elektrodenseite des Substrats angeordneten Elektrode nutzen zu können, kann vorgesehen sein, daß sich die gasdichte Zone im wesentlichen parallel zu einem Rand des Substrats erstreckt und vorzugsweise nahe des Randes des Substrats angeordnet ist.

Der erfindungsgemäße Aufbau einer Brennstoffzelleneinheit eignet sich insbesondere für sogenannte Hochtemperatur-Brennstoffzelleneinheiten, die eine Betriebstemperatur von bis zu 1000°C aufweisen und ohne externen Reformer direkt mit einem kohlenwasserstoffhaltigen Brenngas wie beispielsweise Methan oder Erdgas oder, alternativ hierzu, unter Verwendung eines externen Reformers, mit einem kohlenwasserstoffhaltigen Brenngas, wie beispielsweise Methan, Erdgas, Diesel- oder Benzinkraftstoff, betrieben werden können.

Anspruch 15 ist auf einen Brennstoffzellenblockverbund gerichtet, welcher eine Mehrzahl von erfindungsgemäßen Brennstoffzelleneinheiten umfaßt, die längs einer Stapelrichtung aufeinander folgen.

Weitere Merkmale und Vorteile der Erfindung sind Gegenstand der nachfolgenden Beschreibung und zeichnerischen Darstellung von Ausführungsbeispielen.

In den Zeichnungen zeigen:
- Fig. 1: eine schematische perspektivische Darstellung einer Brennstoffzellenvorrichtung mit Zuführleitungen und Abführleitungen für das Oxidationsmittel und das Brennstoffgas;
- Fig. 2: einen schematischen vertikalen Schnitt durch einen in dem Gehäuse der Brennstoffzellenvorrichtung aus Fig. 1 angeordneten Brennstoffzellenblockverbund;
- Fig. 3: eine Draufsicht von oben auf Endplatten des Brennstoffzellenblockverbunds aus Fig. 2;
- Fig. 4: einen schematischen Längsschnitt durch eine Kathoden-Anoden-Elektrolyt-Einheit mit daran angrenzenden Kontaktplatten;
- Fig.5: eine schematische Draufsicht auf eine Kontaktplatte einer Brennstoffzelleneinheit;
- Fig. 6: eine schematische Draufsicht auf einen Fluidführungsrahmen einer Brennstoffzelleneinheit;
- Fig. 7: den rechten Teil eines schematischen Querschnitts durch vier in der Stapelrichtung des Brennstoffzellenblockverbunds aufeinanderfolgende Brennstoffzelleneinheiten;
- Fig. 8: den rechten Teil eines schematischen Längsschnitts durch vier längs der Stapelrichtung des Brennstoffzellenblockverbunds aufeinanderfolgende Brennstoffzelleneinheiten im Bereich eines Gaskanals;
- Fig. 9: den rechten Teil eines schematischen Längsschnitts durch vier längs der Stapelrichtung des Brennstoffzellenblockverbunds aufeinanderfolgende Brennstoffzelleneinheiten im Bereich zwischen zwei Gaskanälen;
- Fig. 10: eine schematische perspektivische Darstellung eines einen Gaskanal umgebenden ringförmigen Abstützelements einer Brennstoffzelleneinheit;
- Fig. 11: eine vergrößerte Darstellung des Bereichs I aus Fig. 7;
- Fig. 12: eine schematische perspektivische Explosionsdarstellung zweier in der Stapelrichtung aufeinanderfolgender Brennstoffzelleneinheiten;
- Fig. 13: eine Draufsicht auf das Gehäuse einer Brennstoffzelleneinheit im Bereich einer Gasdurchgangsöffnung bei einer zweiten Ausführungsform der Brennstoffzelleneinheit, welche eine Vielzahl einstückig mit den Gehäusewänden ausgebildeter Abstützelemente aufweist;
- Fig. 14: einen schematischen Schnitt durch das Gehäuse der Brennstoffzelleneinheit aus Fig. 13 längs der Linie 14-14 in Fig. 13; und
- Fig. 15: einen schematischen Schnitt durch das Gehäuse der Brennstoffzelleneinheit aus Fig. 13 längs der Linie 15-15 in Fig. 13.

Gleiche oder funktional äquivalente Elemente sind in allen Figuren mit denselben Bezugszeichen bezeichnet.

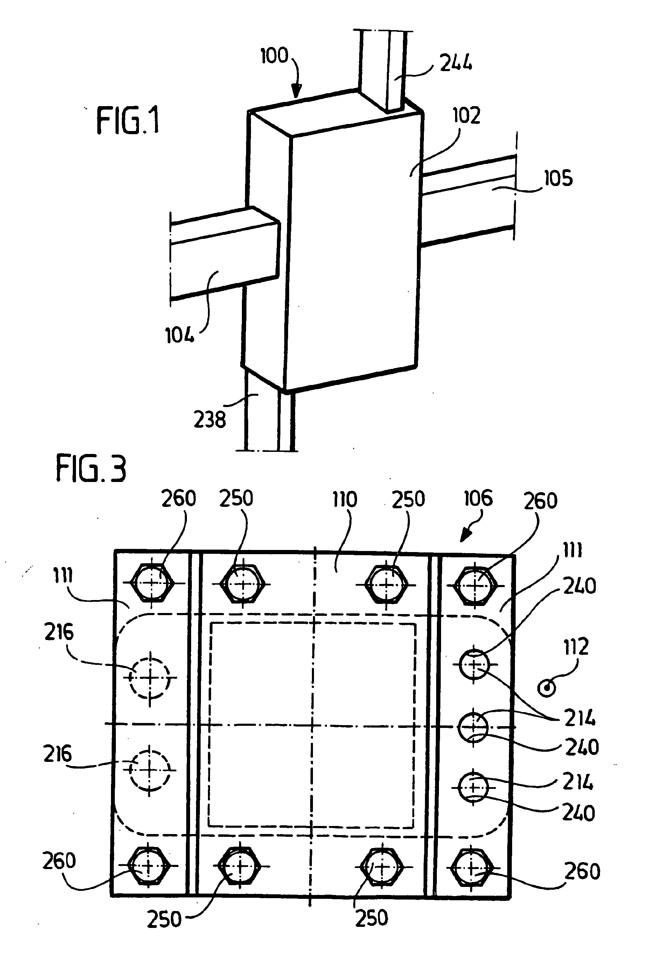

Eine in den Fig. 1 bis 12 dargestellte, als Ganzes mit 100 bezeichnete Brennstoffzellenvorrichtung umfaßt ein im wesentlichen quaderförmiges Gehäuse 102 (siehe Fig. 1), in das eine Oxidationsmittel-Zuführleitung 104 mündet, über die dem Innenraum des Gehäuses 102 ein Oxidationsmittel, beispielsweise Luft oder reiner Sauerstoff, von einem (nicht dargestellten) Zuführgebläse unter einem Überdruck von beispielsweise ungefähr 50 mbar zugeführt wird.

Ferner mündet in das Gehäuse 102 eine Oxidationsmittel-Abführleitung 105, durch welche überschüssiges Oxidationsmittel aus dem Innenraum des Gehäuses 102 abführbar ist.

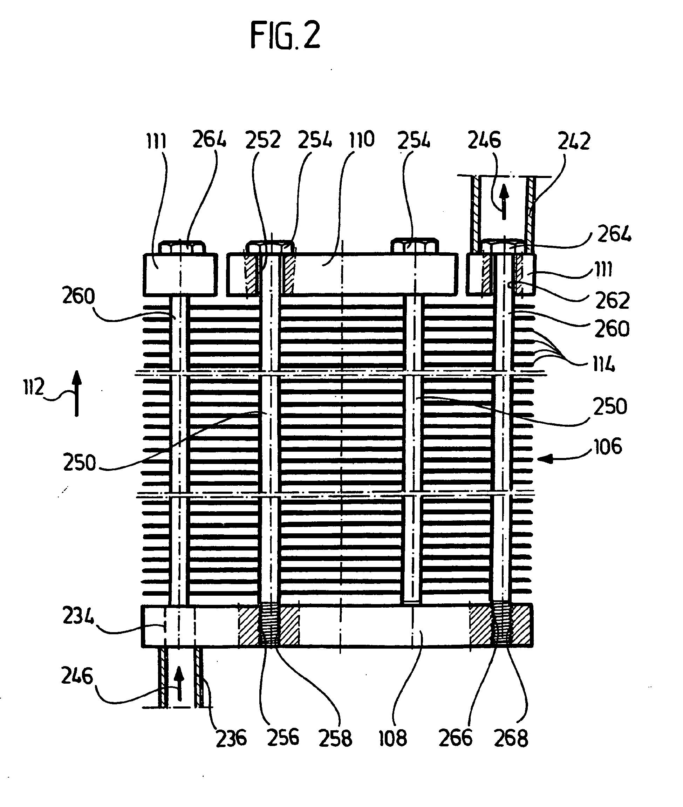

Im Innenraum des Gehäuses 102 ist ein in den Fig. 2 und 3 als Ganzes dargestellter Brennstoffzellenblockverbund 106 angeordnet, welcher eine untere Endplatte 108, eine mittlere obere Endplatte 110, zwei seitliche obere Endplatten 111 und eine Vielzahl zwischen der unteren Endplatte 108 und den oberen Endplatten 110, 111 angeordneter, längs einer Stapelrichtung 112 aufeinanderfolgender Brennstoffzelleneinheiten 114 umfaßt.

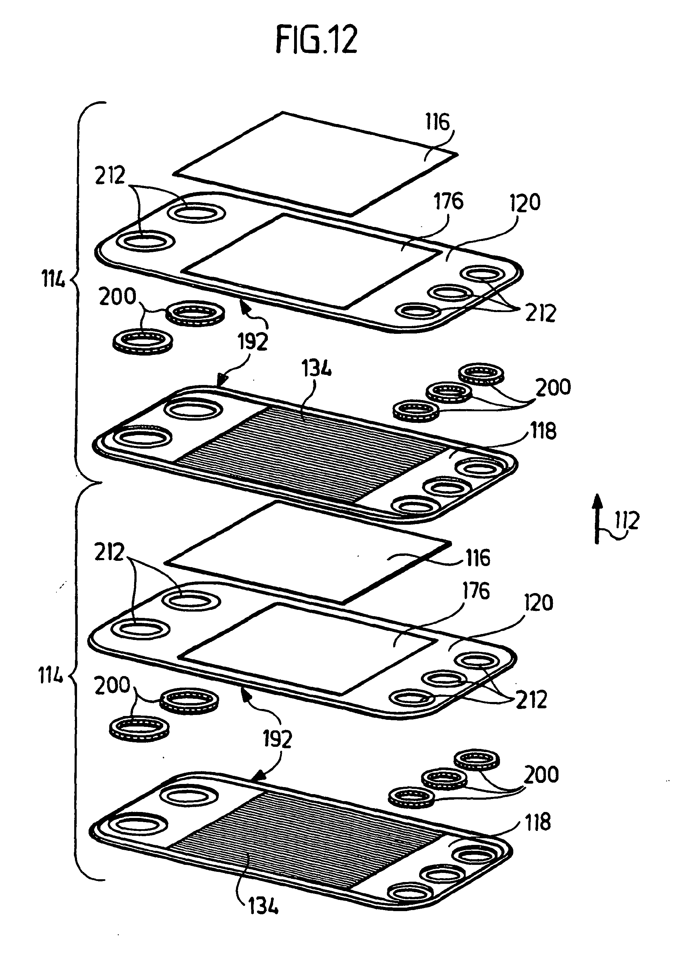

Wie am besten aus Fig. 12 zu ersehen ist, welche eine perspektivische Explosionsdarstellung zweier längs der Stapelrichtung 112 aufeinanderfolgender Brennstoffzelleneinheiten 114 zeigt, umfaßt jede der Brennstoffzelleneinheiten 114 eine im wesentlichen plattenförmige Kathoden-Anoden-Elektrolyt-Einheit 116 (im folgenden kurz als KAE-Einheit bezeichnet), die zwischen einer Kontaktplatte 118 und einem Fluidführungsrahmen 120 gehalten ist.

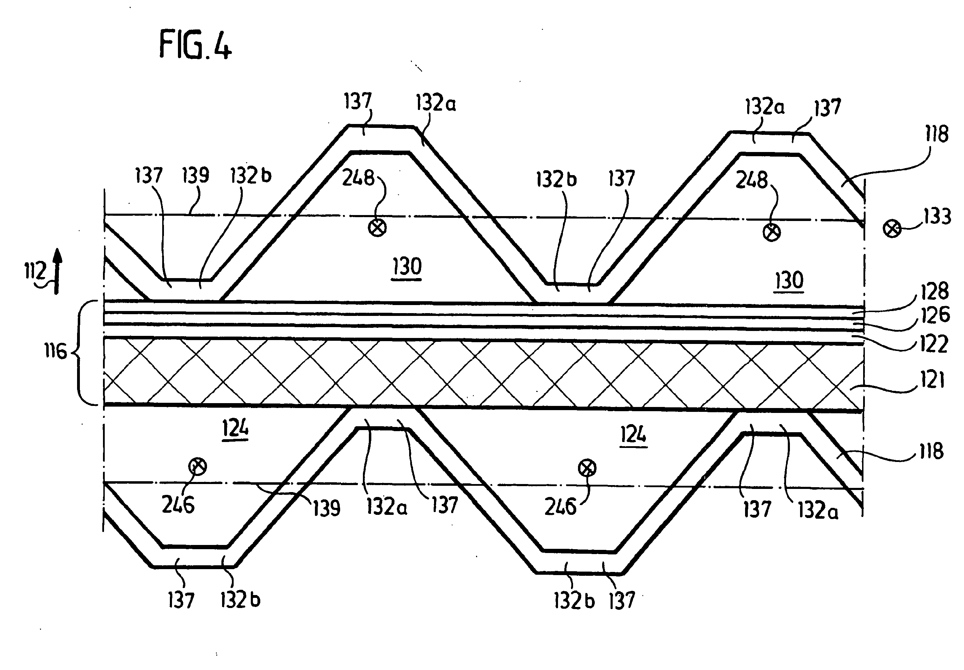

Die KAE-Einheit 116 umfaßt, wie in Fig. 4 rein schematisch dargestellt ist, ein gasdurchlässiges, elektrisch leitfähiges Substrat 121, das beispielsweise als Metalldrahtgeflecht, Metalldrahtvlies, Metalldrahtgewebe, Metalldrahtgestrick oder als ein aus gesinterten oder gepreßten Metallpartikeln bestehender poröser Körper ausgebildet sein kann, wobei durch das Substrat 121 ein Brenngas aus einem an das Substrat 121 angrenzenden Brenngasraum 124 hindurchtreten kann.

Ferner umfaßt die KAE-Einheit 116 eine auf dem Substrat 121 angeordnete plattenförmige Anode 122 aus einem elektrisch leitfähigen keramischen Material, beispielsweise Ni-ZrO₂-Cermet (Keramik-Metall-Gemisch), welches porös ist, um dem Brenngas aus dem Brenngasraum 124 den Durchtritt durch die Anode 122 zu dem an die Anode 122 angrenzenden Elektrolyten 126 zu ermöglichen.

Als Brenngas kann beispielsweise ein kohlenwasserstoffhaltiges Gasgemisch oder reiner Wasserstoff verwendet werden.

Der Elektrolyt 126 ist vorzugsweise als Feststoffelektrolyt ausgebildet uns beispielsweise aus Yttrium-stabilisiertem Zirkoniumdioxid gebildet.

Auf der der Anode 122 gegenüberliegenden Seite des Elektrolyten 126 grenzt an denselben eine plattenförmige Kathode 128, die aus einem elektrisch leitfähigen keramischen Material, beispielsweise aus LaMnO₃, gebildet ist und eine Porosität aufweist, um einem Oxidationsmittel, beispielsweise Luft oder reinem Sauerstoff, aus einem an die Kathode 128 angrenzenden Oxidationsmittelraum 130 den Durchtritt zu dem Elektrolyten 126 zu ermöglichen.

Der Elektrolyt 126 ist im wesentlichen gasdicht, so daß kein Oxidationsmittel aus dem Oxidationsmittelraum 130 durch den Elektrolyten 126 in den Brenngasraum 124 und kein Brenngas aus dem Brenngasraum 124 durch den Elektrolyten 126 in den Oxidationsmittelraum 130 gelangen kann.

Im Betrieb der Brennstoffzellenvorrichtung weist die KAE-Einheit 116 jeder Brennstoffzelleneinheit 114 eine Temperatur von beispielsweise ungefähr 850°C auf, bei welcher der Elektrolyt 126 für Sauerstoffionen leitfähig ist. Das Oxidationsmittel aus dem Oxidationsmittelraum 130 nimmt an der Anode 122 Elektronen auf und gibt zweiwertige Sauerstoffionen an den Elektrolyten 126 ab, welche durch den Elektrolyten 126 hindurch zur Anode 122 wandern. An der Anode 122 wird das Brenngas aus dem Brenngasraum 124 durch die Sauerstoffionen aus dem Elektrolyten 126 oxidiert und gibt dabei Elektronen an die Anode 122 ab.

Die Kontaktplatten 118 dienen dazu, die bei der Reaktion an der Anode 122 frei werdenden Elektronen von der Anode 122 über das Substrat 121 abzuführen bzw. die für die Reaktion an der Kathode 128 benötigten Elektronen der Kathode 128 zuzuführen.

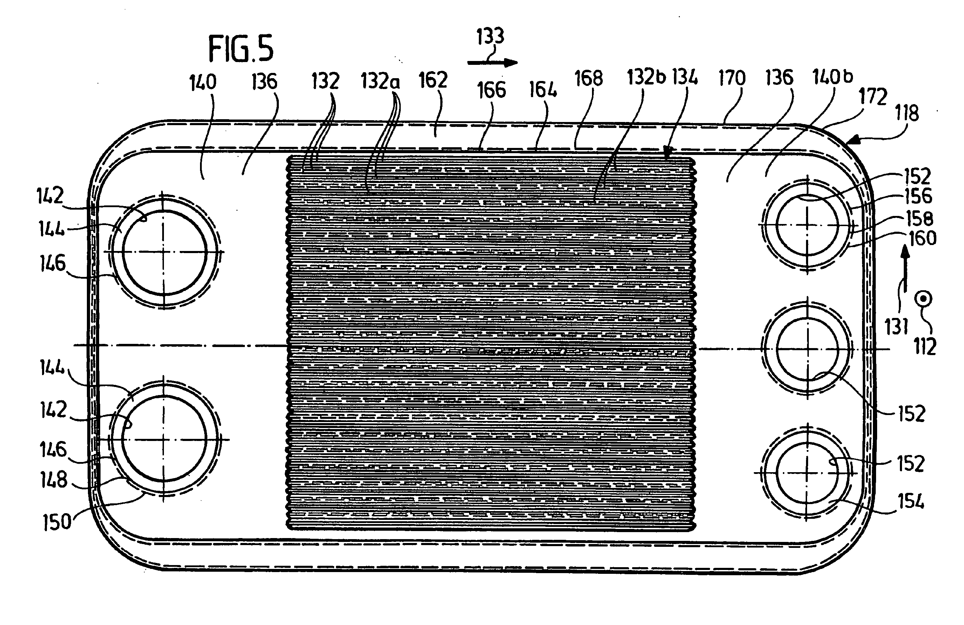

Hierzu besteht jede der Kontaktplatten 118 aus einem elektrisch gut leitfähigen Metallblech, das (wie am besten aus Fig. 5 zu ersehen ist) mit einer Vielzahl von Kontaktelementen 132 versehen ist, welche beispielsweise die Form sich in der Längsrichtung 133 der Kontaktplatte 118 erstreckender Rippen aufweisen, die in der Querrichtung 131 der Kontaktplatte 118 aufeinander folgen, wobei die in der Querrichtung 131 aufeinanderfolgenden Kontaktelemente 132 unmittelbar aneinander angrenzen und von der Mittelebene 139 der Kontaktplatte 118 aus abwechselnd zu verschiedenen Seiten der Kontaktplatte 118 vorspringen. Die von der Kontaktplatte 118 nach oben und somit zu der Anode 122 der derselben Brennstoffzelleneinheit 114 zugehörigen KAE-Einheit 116 vorspringenden anodenseitigen Kontaktelemente sind mit dem Bezugszeichen 132a, die von der Kontaktplatte 118 nach unten und damit zu der Kathode 128 der einer benachbarten Brennstoffzelleneinheit 114 zugehörigen KAE-Einheit 116 vorspringenden kathodenseitigen Kontaktelemente sind mit dem Bezugszeichen 132b bezeichnet.

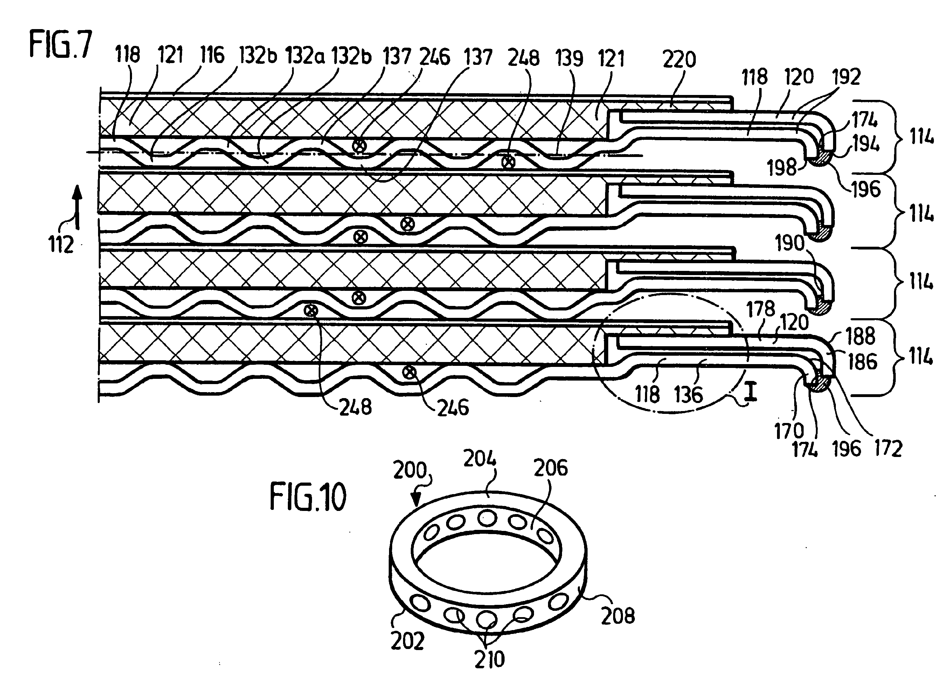

Jedes der Kontaktelemente 132 weist einen mittigen, streifenförmigen Kontaktbereich 137 auf, an dem es mit einer angrenzenden KAE-Einheit 116 in elektrisch leitendem Kontakt steht (siehe insbesondere Fig. 4 und Fig. 7).

Die Kontaktbereiche 137 der anodenseitigen Kontaktelemente 132a einer Kontaktplatte 118 stehen mit dem Substrat 121 und somit mit der Anode 122 der derselben Brennstoffzelleneinheit 114 zugehörigen KAE-Einheit 116 in elektrischem Flächenkontakt, so daß Elektronen von der jeweiligen Anode 122 in die Kontaktplatte 118 gelangen können.

Die kathodenseitigen Kontaktelemente 132b der Kontaktplatten 118 stehen jeweils mit der Kathode 128 der einer benachbarten Brennstoffzelleneinheit 114 zugehörigen KAE-Einheit 116 in elektrisch leitfähigem Flächenkontakt, so daß Elektronen von der Kontaktplatte 118 zu der Kathode 128 gelangen können. Auf diese Weise ermöglichen die Kontaktplatten 118 den Ladungsausgleich zwischen den Anoden 122 und den Kathoden 128 längs der Stapelrichtung 112 aufeinanderfolgender KAE-Einheiten 116.

Die an den Enden des Brennstoffzellenblockverbunds 106 angeordneten Kontaktplatten 118 sind (auf nicht zeichnerisch dargestellte Weise) mit einem externen Stromkreislauf verbunden, um die an diesen randständigen Kontaktplatten 118 entstehenden elektrischen Ladungen abzugreifen.

Das aus den Kontaktelementen 132 gebildete Kontaktfeld 134 jeder Kontaktplatte 118 weist die Struktur eines in der Querrichtung 131 der Kontaktplatte 118 gewellten Wellblechs auf.

Wie am besten aus der Draufsicht der Fig. 5 zu ersehen ist, ist das mit den Kontaktelementen 132 versehene mittige, im wesentlichen rechteckige Kontaktfeld 134 jeder Kontaktplatte 118 in einen ebenen, im wesentlichen rechteckigen Gasführungsbereich 136 der Kontaktplatte 118 eingebettet.

Der Gasführungsbereich 136 weist zu beiden Seiten des Kontaktfeldes 134 jeweils einen Seitenbereich 140a bzw. 140b auf.

In dem Seitenbereich 140a sind mehrere, beispielsweise zwei, im wesentlichen kreisförmige Brenngasdurchgangsöffnungen 142 ausgebildet.

Jede der Brenngasdurchgangsöffnungen 142 ist von einem ringförmigen Randbereich 144 umgeben, wobei jeder der Bereiche 142 gegenüber dem Gasführungsbereich 136 längs der Stapelrichtung 112 nach unten versetzt und mit dem Gasführungsbereich 136 über eine Schräge 146, welche an einer inneren Biegelinie 148 an den jeweiligen Randbereich 144 und längs einer äußeren Biegelinie 150 an den Gasführungsbereich 136 angrenzt, verbunden ist.

Die Brenngasdurchgangsöffnungen 142 dienen dem Durchtritt von den Brennstoffzelleneinheiten 114 zuzuführendem Brenngas durch die jeweilige Kontaktplatte 118.

Der dem Seitenbereich 140a gegenüberliegende Seitenbereich 140b jeder Kontaktplatte 118 ist mit mehreren, beispielsweise mit drei, im wesentlichen kreisförmigen Abgasdurchgangsöffnungen 152 versehen.

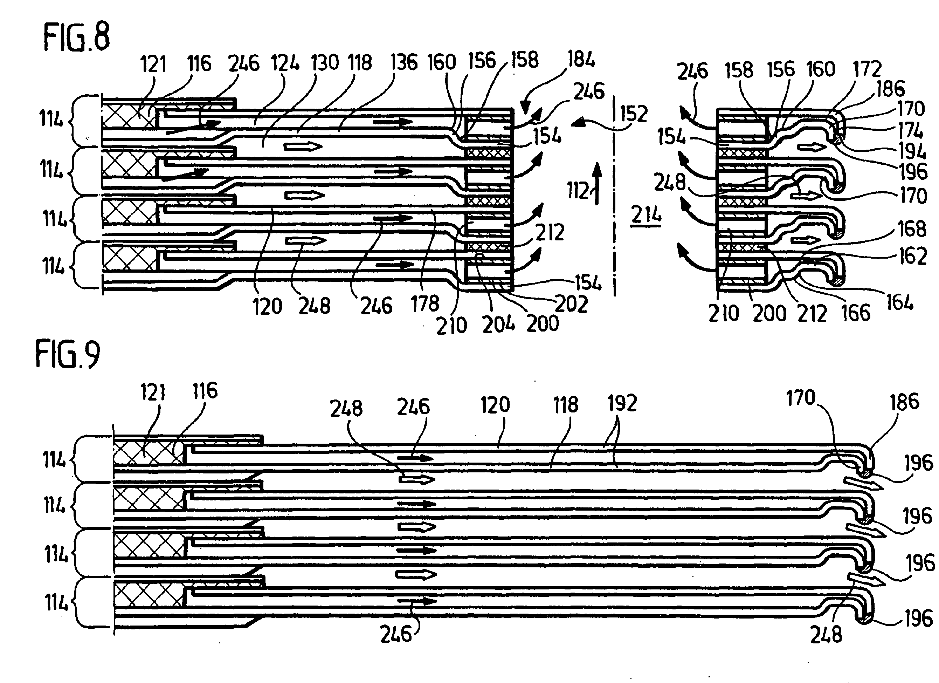

Jede der Abgasdurchgangsöffnungen 152 ist von einem ringförmigen Randbereich 154 umgeben, welcher gegenüber dem Gasführungsbereich 136 der Kontaktplatte 118 längs der Stapelrichtung 112 nach unten versetzt ist und mit dem Gasführungsbereich 136 über eine Schräge 156, welche an einer inneren Biegelinie 158 an den Randbereich 154 und längs einer äußeren Biegelinie 160 an den Gasführungsbereich 136 angrenzt, mit dem Gasführungsbereich 136 verbunden ist (siehe insbesondere Fig. 8).

Die Abgasdurchgangsöffnungen 152 der Kontaktplatte 118 ermöglichen den Durchtritt von aus den Brennstoffzelleneinheiten 114 abzuführendem Abgas, welches überschüssiges Brenngas und Verbrennungsprodukte, insbesondere Wasser, enthält, durch die Kontaktplatte 118.

Ferner ist jede Kontaktplatte 118 mit einem den Gasführungsbereich 136 umschließenden Randbereich 162 versehen, welcher senkrecht zur Stapelrichtung 112 ausgerichtet ist, gegenüber dem Gasführungsbereich 136 längs der Stapelrichtung 112 nach oben versetzt ist und mit dem Gasführungsbereich 136 über eine Schräge 164, welche längs einer inneren Biegelinie 166 an den Gasführungsbereich 136 und längs einer äußeren Biegelinie 168 an den Randbereich 162 angrenzt, verbunden ist.

Der äußere Rand des Randbereichs 162 ist mit einem Verbindungsflansch 170 versehen, welcher längs einer Biegelinie 172 an den Randbereich 162 angrenzt und sich von dem Randbereich 162 im wesentlichen parallel zu der Stapelrichtung 112 nach unten erstreckt.

Die im wesentlichen parallel zur Stapelrichtung 112 ausgerichtete Außenfläche des Verbindungsflansches 170 bildet eine erste Verbindungsfläche 174.

Jede der Kontaktplatten 118 ist als Blechformteil ausgebildet, welches aus einer im wesentlichen ebenen, im wesentlichen rechteckigen Blechlage durch Prägen und/oder Tiefziehen sowie durch Ausstanzen oder Ausschneiden der Brenngasdurchgangsöffnungen 142 und der Abgasdurchgangsöffnungen 152 gebildet ist.

Auch die Fluidführungsrahmen 120 sind als Blechformteile aus einer im wesentlichen ebenen, im wesentlichen rechteckigen Blechlage gebildet.

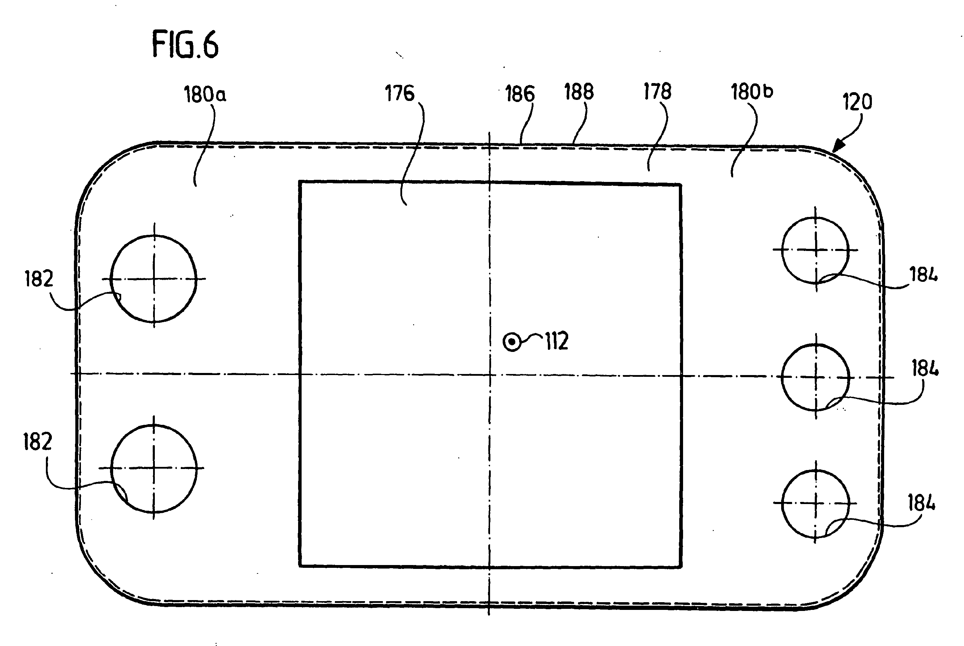

Wie am besten aus Fig. 6 zu ersehen ist, weist jeder Fluidführungsrahmen 120 eine im wesentlichen rechteckige, mittige Durchtrittsöffnung 176 für den Durchtritt der KAE-Einheit 116 derselben Brennstoffzelleneinheit 114 auf.

Diese Durchtrittsöffnung 176 ist von einem im wesentlichen ebenen, senkrecht zur Stapelrichtung 112 ausgerichteten Gasführungsbereich 178 umgeben, welcher zwei Seitenbereiche 180a, 180b umfaßt, welche einander an der Durchtrittsöffnung 176 gegenüberliegen.

In dem Seitenbereich 180a sind mehrere, beispielsweise zwei, im wesentlichen kreisförmige Brenngasdurchgangsöffnungen 182 ausgebildet, welche den Durchtritt von Brenngas durch den Fluidführungsrahmen 120 ermöglichen.

In dem dem Seitenbereich 180a gegenüberliegenden Seitenbereich 180b des Gasführungsbereichs 178 sind mehrere, beispielsweise drei, im wesentlichen kreisförmige Abgasdurchgangsöffnungen 184 ausgebildet, welche den Durchtritt von aus den Brennstoffzelleneinheiten 114 abzuführendem Abgas durch den Fluidführungsrahmen 120 ermöglichen.

Der Gasführungsbereich 178 jedes Fluidführungsrahmens 120 ist an seinem äußeren Rand mit einem Verbindungsflansch 186 versehen, welcher längs einer Biegelinie 188 an den Gasführungsbereich 178 angrenzt und sich von dem Gasführungsbereich 178 im wesentlichen parallel zu der Stapelrichtung 112 nach unten erstreckt.

Die im wesentlichen parallel zur Stapelrichtung 112 ausgerichtete Innenseite des Verbindungsflansches 186 bildet eine zweite Verbindungsfläche 190.

Jeweils ein Fluidführungsrahmen 120 und eine Kontaktplatte 118 bilden zusammen ein Gehäuse 192 einer Brennstoffzelleneinheit 114.

Wie aus den Fig. 7 bis 9 zu ersehen ist, sind der Fluidführungsrahmen 120 und die Kontaktplatte 118 eines solchen Gehäuses 192 einer Brennstoffzelleneinheit 114 an ihren Verbindungsflanschen 186 bzw. 170 aneinander festgelegt und gasdicht gegeneinander abgedichtet.

Dabei umgreift der im wesentlichen parallel zur Stapelrichtung 112 ausgerichtete Verbindungsflansch 186 des Fluidführungsrahmens 120 den ebenfalls im wesentlichen parallel zur Stapelrichtung 112 ausgerichteten Verbindungsflansch 170 der Kontaktplatte 118 derart, daß die erste Verbindungsfläche an dem Verbindungsflansch 170 der Kontaktplatte 118 und die zweite Verbindungsfläche 190 an dem Verbindungsflansch 186 des Fluidführungsrahmens 120 einander gegenüberstehen.

Wie aus den Fig. 7 bis 9 zu ersehen ist, sind der untere Rand 194 und die zweite Verbindungsfläche 190 des Verbindungsflansches 186 des Fluidführungsrahmens 120 mittels einer Schweißnaht 196 mit der ersten Verbindungsfläche 174 und an dem unteren Rand 198 des Verbindungsflansches 170 der Kontaktplatte 118 verbunden und so an dem Verbindungsflansch 170 der Kontaktplatte 118 festgelegt.

Dabei sorgt die längs der Ränder der Kontaktplatte 118 und des Fluidführungsrahmens 120 umlaufende Schweißnaht 196 für einen gasdichten Verschluß des Zwischenraums zwischen den Verbindungsflanschen 186 und 170.

Die Schweißnaht 196 kann beispielsweise im Laserschweißverfahren oder im Elektronenstrahlverfahren hergestellt werden.

Alternativ oder ergänzend zu einer Verschweißung kann die Verbindung zwischen den Verbindungsflanschen 186 und 170 auch durch Verlötung, insbesondere durch eine Hartlötung, erfolgen.

Dadurch, daß die Verbindungsflansche 186 und 170 und insbesondere die einander gegenüberstehenden Verbindungsflächen 174 und 190 parallel zur Stapelrichtung 112 ausgerichtet sind, ist die Kontaktplatte 118 in einer Art Schiebesitz in dem Fluidführungsrahmen 120 aufgenommen, so daß die Verbindungsflansche 186 und 170 auch dann problemlos gasdicht miteinander verbunden werden können, wenn der Abstand zwischen den unteren Rändern 194 und 198 längs der Stapelrichtung 112 aufgrund von Fertigungstoleranzen bei der Herstellung der Kontaktplatte 118 und des Fluidführungsrahmens 120 oder aufgrund von Montagetoleranzen beim Zusammenbau der Brennstoffzelleneinheit 114 längs des Randes der Kontaktplatte 118 und des Randes des Fluidführungsrahmens 120 variiert.

Wie am besten aus Fig. 8 zu ersehen ist, sind im Bereich der Abgasdurchgangsöffnungen 152, 184 ringförmige Abstützelemente 200 angeordnet, welche mit ihrer Unterseite 202 jeweils an der Oberseite eines eine Abgasdurchgangsöffnung 152 umgebenden Randbereichs 154 einer Kontaktplatte 118 und mit ihrer Oberseite 204 jeweils an der Unterseite des eine Abgasdurchgangsöffnung 184 in dem Fluidführungsrahmen 120 umgebenden Bereichs des Fluidführungsrahmens 120 anliegen.

Ähnliche, sich nur in ihren Abmessungen von den Abstützelementen 200 an den Abgasdurchgangsöffnungen 152, 184 unterscheidende Abstützelemente 200 sind zwischen der Kontaktplatte 118 und dem Fluidführungsrahmen 120 im Bereich der Brenngasdurchgangsöffnungen 142, 182 angeordnet.

Ein solches Abstützelement 200 ist in Fig. 10 perspektivisch dargestellt und weist die Form eines Kreisringes mit einem im wesentlichen rechteckigen Querschnitt auf. Um einen Gasdurchtritt von der Innenseite zur Außenseite des Abstützelements 200 (oder in umgekehrter Richtung) zu ermöglichen, ist das Abstützelement 200 mit radial ausgerichteten, das Abstützelement 200 von dessen Innenseite 206 bis zu dessen Außenseite 208 durchsetzenden, in der Umfangsrichtung des Abstützelements 200 voneinander beabstandeten, im wesentlichen zylindrischen Gasdurchtrittskanälen 210 versehen.

Die Abstützelemente 200 dienen dazu, die Kontaktplatte 118 und den Fluidführungsrahmen 120 eines Gehäuses 192 einer Brennstoffzelleneinheit 114 auf Abstand voneinander zu halten und so ein Zusammendrücken des Gehäuses 192 durch die bei der Montage des Brennstoffzellenblockverbunds 106 auf das Gehäuse 192 einwirkende Einspannkraft zu verhindern.

Die Abstützwirkung der Abstützelemente 200 spielt bei der Betriebstemperatur der Brennstoffzellenvorrichtung 100, welche bei einer Hochtemperatur-Brennstoffzellenvorrichtung im Bereich von ungefähr 800°C bis ungefähr 1000°C liegt, eine besondere Rolle, da bei solchen Betriebstemperaturen die Streckgrenze des Stahls, aus welchem die Kontaktplatte 118 und der Fluidführungsrahmen 120 gebildet sind, auf Werte von weniger als ungefähr 10 N/mm² abfällt, so daß ohne das Vorhandensein der Abstützelemente 200 bereits geringe Einspannkräfte dazu ausreichen würden, die Kontaktplatte 118 und den Fluidführungsrahmen 120 eines Gehäuses 192 gegeneinander zu drücken.

Die Abstützelemente 200 können aus einem metallischen Material oder aus einem keramischen Material gebildet sein.

Statt eines massiven Abstützelements mit Gasdurchtrittskanälen 210 kann auch ein Abstützelement verwendet werden, welches als poröses Sinterelement aus einem keramischen und/oder einem metallischen Material gebildet ist. Ein solches Sinterelement weist bereits aufgrund seiner Porosität eine ausreichende Gasdurchlässigkeit auf, so daß ein solches Element nicht mit Gasdurchtrittskanälen versehen werden muß.

Wie am besten aus den Fig. 8 und 12 zu ersehen ist, ist zwischen der Unterseite des Randbereichs 154 jeder Abgasdurchgangsöffnung 152 in einer Kontaktplatte 118 und der Oberseite des Gasführungsbereichs 178 des in der Stapelrichtung 112 unter der betreffenden Kontaktplatte 118 angeordneten Fluidführungsrahmens 120 einer benachbarten Brennstoffzelleneinheit 114 jeweils eine Gaskanal-Dichtung 212 angeordnet. Jede der Gaskanaldichtungen 212 dichtet den Zwischenraum zwischen der angrenzenden Kontaktplatte 118 und dem angrenzenden Fluidführungsrahmen 120 gasdicht ab und umschließt die jeweilige Abgasdurchgangsöffnung 152, 184 in der Kontaktplatte 118 bzw. in dem Fluidführungsrahmen 120 ringförmig.

Wie am besten aus Fig. 8 zu erkennen ist, begrenzen die in der Stapelrichtung 112 aufeinanderfolgenden Kontaktplatten 118 und Fluidführungsrahmen 120 mit den jeweils dazwischen angeordneten Abstützelementen 200 und Gaskanal-Dichtungen 212 mehrere, beispielsweise drei, Abgaskanäle 214, in welche Abgas aus den Brenngasräumen 124 der Brennstoffzelleneinheiten 114 durch die Gasdurchtrittskanäle 210 in den Abstützelementen 200 eintreten kann und die durch die Gaskanal-Dichtungen 212 gasdicht von den Oxidationsmittelräumen 130 der Brennstoffzelleneinheiten 114 getrennt sind.

In entsprechender Weise sind auch zwischen den Randbereichen 144 der Brenngasdurchgangsöffnungen 142 jeder Kontaktplatte 118 und dem Fluidführungsrahmen 120 einer in der Stapelrichtung 112 unter der betreffenden Kontaktplatte 118 angeordneten Brennstoffzelleneinheit 114 Gaskanal-Dichtungen 212 angeordnet, welche die Brenngasdurchgangsöffnungen 142 und 182 in der Kontaktplatte 118 bzw. in dem Fluidführungsrahmen 120 ringförmig umschließen, so daß die in der Stapelrichtung 112 aufeinanderfolgenden Kontaktplatten 118 und Fluidführungsrahmen 120 zusammen mit den jeweils dazwischen angeordneten Abstützelementen 200 und Gaskanal-Dichtungen 212 mehrere, beispielsweise zwei, Brenngaskanäle 216 bilden, welche sich längs der Stapelrichtung 112 erstrecken, aus welchen Brenngas durch die Gasdurchtrittskanäle 210 in den Abstützelementen 200 in die Brenngasräume 124 der Brennstoffzelleneinheiten 114 austreten kann und welche durch die Gaskanal-Dichtungen 212 gasdicht von den Oxidationsmittelräumen 130 der Brennstoffzelleneinheiten 114 getrennt sind.

Die Gaskanal-Dichtungen 112 können beispielsweise jeweils eine Flachdichtung aus Glimmer, insbesondere aus Phlogopit, umfassen.

Alternativ oder ergänzend hierzu kann auch vorgesehen sein, daß die Gaskanal-Dichtungen 212 jeweils eine gasdichte, elektrisch isolierende Beschichtung umfassen, die als Paste im Siebdruckverfahren oder mittels Walzenbeschichtung auf die Oberfläche der Kontaktplatte 118 oder auf die Oberfläche des Fluidführungsrahmens 120 aufgebracht wird.

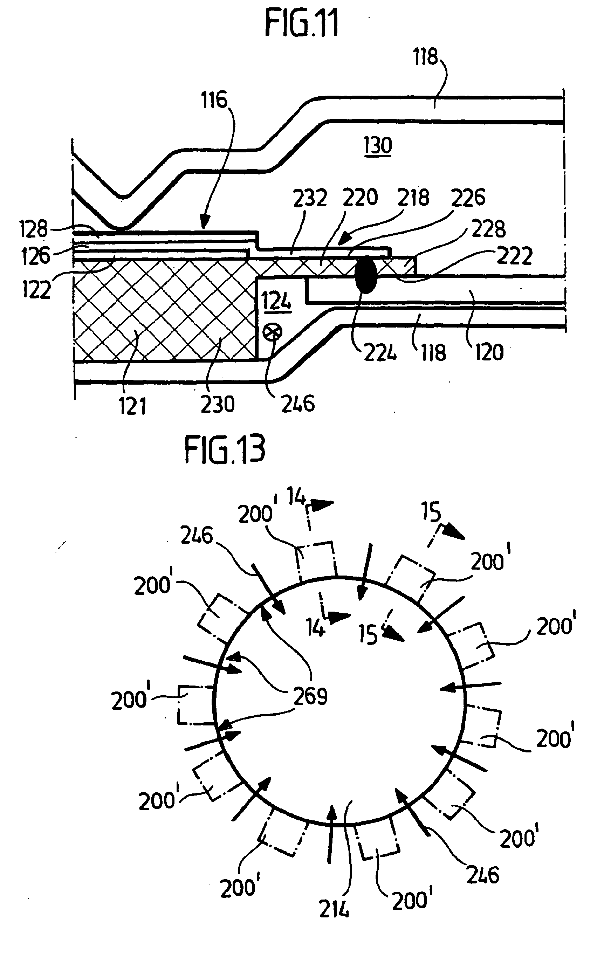

Ferner ist der Brenngasraum 124 jeder Brennstoffzelleneinheit 114 von dem Oxidationsmittelraum 130 einer in der Stapelrichtung 112 darüber angeordneten Brennstoffzelleneinheit 114 gasdicht durch eine Brenngasraum-Dichtung 218 getrennt, deren Aufbau im folgenden unter Bezugnahme auf die Figur 11 detailliert beschrieben wird.

Wie aus Fig. 11 zu ersehen ist, weist das Substrat 121 der KAE-Einheit 116 einen verdichteten Außenbereich 220 auf, der sich längs des gesamten Umfangs des Substrats 121 erstreckt und in welchem die Dicke des Substrats 121 durch einen Pressvorgang auf beispielsweise ungefähr 20 % der Anfangsdicke, d.h. der Dicke des ungepreßten Bereichs des Substrats 121, reduziert worden ist.

Bei diesem Verdichtungsvorgang wird die Porosität des Substrats 121, d.h. der prozentuale Anteil des gasgefüllten Volumens des Substrats 121 am Gesamtvolumen des Substrats 121, in dem verdichteten Außenbereich 220 auf nahezu Null verringert.

Um dies zu erreichen, wird bei einem Substrat 121, das eine Porosität von x % aufweist, die Dicke im verdichteten Außenbereich 220 durch den Verdichtungsvorgang vorzugsweise auf (100 - x)% der Anfangsdicke reduziert; im Falle einer Porosität von 80 % also auf 20 % der Anfangsdicke.

Das Substrat 121 wird mit der Unterseite 222 des verdichteten Außenbereichs 220 auf den Fluidführungsrahmen 120 aufgelegt und durch einen Schweißvorgang, beispielsweise durch Laserschweißen, Elektronenstrahlschweißen, Buckelschweißen oder Kondensatorentladungsschweißen, gasdicht mit dem metallischen Material des Fluidführungsrahmens 120 verbunden.

Durch den Schweißvorgang wird in dem verdichteten Außenbereich 220 des Substrats 121 eine keine Porosität mehr aufweisende gasdichte Zone 224 gebildet, welche sich von der Unterseite 222 bis zu der Oberseite 226 des verdichteten Außenbereichs 220 durch den verdichteten Außenbereich 220 des Substrats 121 hindurch erstreckt und eine sich längs des gesamten Umfangs des Substrats 121 erstreckende gasdichte Barriere bildet, welche einen Gasdurchtritt von dem außerhalb der gasdichten Zone 224 liegenden Randbereich 228 in den von der gasdichten Zone 224 umschlossenen Innenbereich 230 des Substrats 121 ebenso wie einen Gasdurchtritt in umgekehrter Richtung verhindert.

Statt durch Verschweißen des Substrats 121 mit dem Fluidführungsrahmen 120 kann die gasdichte Zone 224 im verdichteten Außenbereich 220 des Substrats 221 auch durch Verlöten des Substrats 121 mit dem Fluidführungsrahmen 120 gebildet werden. Dabei wird das verwendete Lot aufgrund der Kapillarwirkung in die noch vorhandenen Poren und Durchgangskanäle in dem verdichteten Außenbereich 220 des Substrats 121 hineingesogen und verschließt diese Durchgangsöffnungen dauerhaft, so daß eine sich über die gesamte Höhe des verdichteten Außenbereichs 220 erstreckende gasdichte Zone 224 entsteht.

Wie aus Fig. 11 ferner zu ersehen ist, erstreckt sich der gasdichte Elektrolyt 126 der KAE-Einheit 116 über den Rand der gasdurchlässigen Anode 122 und über den Rand der gasdurchlässigen Kathode 128 hinaus und liegt mit seiner Unterseite direkt auf der Oberseite 226 des verdichteten Außenbereichs 220 des Substrats 121 auf.

Dieser direkt auf dem Substrat 121 angeordnete Außenbereich 232 des Elektrolyts 126 erstreckt sich zum Rand des Substrats 121 hin so weit nach außen, daß er die gasdichte Zone 224 überdeckt und somit der Innenbereich 230 des Substrats 121 gasdicht von dem über dem Elektrolyten 126 liegenden Oxidationsmittelraum 130 getrennt ist, ohne daß für diese gasdichte Abtrennung ein zusätzliches Abdichtmedium benötigt wird.

Der Außenbereich 232 des Elektrolyten 126 bildet somit zusammen mit der gasdichten Zone 224 des verdichteten Außenbereichs 220 des Substrats 121 eine gasdichte Brenngasraum-Dichtung 218, welche den oberhalb des Fluidführungsrahmens 120 angeordneten Oxidationsmittelraum 130 gasdicht von dem unterhalb des Fluidführungsrahmens 120 angeordneten Brenngasraum 124 trennt.

Bei der in Fig. 11 dargestellten Ausführungsform der Brenngasraum-Dichtung 218 wird diese Dichtung im Bereich zwischen dem äußeren Rand der Anode 122 und der gasdichten Zone 224 des verdichteten Außenbereichs 220 des Substrats 121 durch den über die Anode 122 hinausgeführten Außenbereich 232 des Elektrolyten 126 gebildet.

Alternativ oder ergänzend hierzu kann auch vorgesehen sein, daß die Brenngasraum-Dichtung 218 einen aus einer Vergußmasse gebildeten Dichtungsbereich umfaßt, welcher den Bereich vom äußeren Rand der Anode 122 bis zu der gasdichten Zone 224 gasdicht überdeckt.

Eine solche Vergußmasse kann beispielsweise ein Glaslot, ein Metallot oder eine anorganische Paste umfassen.

Umfaßt die Brenngasraum-Dichtung 218 sowohl einen bis über die gasdichte Zone 224 hinausgezogenen Elektrolyten 126 als auch eine diesen Außenbereich 232 des Elektrolyten 126 überdeckende Vergußmasse, so wird hierdurch eine besonders dichte und zuverlässige Abdichtung des Brenngasraums 124 gegenüber dem Oxidationsmittelraum 130 erzielt.

Wie insbesondere aus Fig. 7 zu ersehen ist, liegt im montierten Zustand einer Brennstoffzelleneinheit 114 die KAE-Einheit 116 der betreffenden Brennstoffzelle 114 mit dem Substrat 121 auf den anodenseitigen Kontaktelementen 132a der Kontaktplatte 118 der Brennstoffzelleneinheit 114 auf.

Ferner liegt die KAE-Einheit 116 mit dem verdichteten Außenbereich 220 des Substrats 121 auf dem Fluidführungsrahmen 120 derselben Brennstoffzelleneinheit 114 auf, wobei sich der unverdichtete Bereich des Substrats 121 durch die Durchtrittsöffnung 176 des Fluidführungsrahmen 120 hindurch erstreckt, das Substrat 121 durch Verschweißung oder Verlötung an dem Fluidführungsrahmen 120 festgelegt ist und der Fluidführungsrahmen 120 durch Verschweißung an der Schweißnaht 196 oder durch Verlötung seines Verbindungsflansches 186 mit dem Verbindungsflansch 170 der Kontaktplatte 118 an der Kontaktplatte 118 festgelegt ist.

Die Brennstoffzelleneinheiten 114 des Brennstoffzellenblockverbunds 106 sind längs der Stapelrichtung 112 so aufeinandergestapelt, daß die kathodenseitigen Kontaktelemente 132b jeder Kontaktplatte 118 sich zu der Kathode der KAE-Einheit 116 der darunter angeordneten Brennstoffzelleneinheit 114 erstrecken und im elektrisch leitenden Kontakt an derselben anliegen.

Dabei fluchten die Brenngasdurchgangsöffnungen 142, 182 und die Abgasdurchgangsöffnungen 152, 184 längs der Stapelrichtung 112 aufeinanderfolgender Brennstoffzelleneinheiten 114 miteinander, um so die Brenngaskanäle 216 bzw. die Abgaskanäle 214 zu bilden.

Wie aus Fig. 2 zu ersehen ist, mündet an dem unterem Ende jedes Brenngaskanals 216 in denselben eine Brenngaszuführöffnung 234, welche die untere Endplatte 108 des Brennstoffzellenblockverbunds 106 koaxial zu dem jeweiligen Brenngaskanal 216 durchsetzt.

An das dem jeweiligen Brenngaskanal 216 abgewandte Ende der Brenngaszuführöffnung 234 ist eine Brenngas-Zweigleitung 236 angeschlossen, welche von einer Brenngas-Zuführleitung 238 abzweigt, die durch das Gehäuse der Brennstoffzellenvorrichtung 100 gasdicht hindurchgeführt und an eine (nicht dargestellte) Brenngaszufuhr angeschlossen ist, welche der Brenngas-Zuführleitung 238 ein Brenngas, beispielsweise ein kohlenwasserstoffhaltiges Gas oder reinen Wasserstoff, unter einem Überdruck von beispielsweise ungefähr 50 mbar zuführt.

Die Abgaskanäle 214 des Brennstoffzellenblockverbunds 106 münden an ihren oberen Enden jeweils in eine zum betreffenden Abgaskanal 214 koaxiale Abgasabführöffnung 240 (siehe Fig. 3), welche die seitliche obere Endplatte 111 durchsetzt und an ihrem dem jeweiligen Abgaskanal 214 abgewandten Ende an jeweils eine Abgas-Zweigleitung 242 angeschlossen ist.

Diese Abgas-Zweigleitungen 242 münden in eine gemeinsame Abgas-Abführleitung 244 (siehe Fig. 1), welche gasdicht durch das Gehäuse 102 der Brennstoffzellenvorrichtung 100 hindurchgeführt und an eine (nicht dargestellt) Abgasbehandlungseinheit angeschlossen ist.

Im Betrieb der Brennstoffzellenvorrichtung 100 strömt das Brenngas durch die Brenngas-Zuführleitung 238, die Brenngas-Zweigleitungen 236 und die Brenngaszuführöffnungen 234 in die beiden Brenngaskanäle 216 ein und verteilt sich von dort durch die Gasdurchtrittskanäle 210 der brenngaskanalseitigen Abstützelemente 200 auf die Brenngasräume 124 der Brennstoffzelleneinheiten 114, welche jeweils durch die Kontaktplatte 118, den Fluidführungsrahmen 120 und die KAE-Einheit 116 der betreffenden Brennstoffzelleneinheit 114 umschlossen sind.

Wie bereits beschrieben, wird das Brenngas zumindest teilweise an der den jeweiligen Brenngasraum 124 begrenzenden Anode 122 der jeweiligen KAE-Einheit 116 oxidiert.

Das Oxidationsprodukt (Wasser) gelangt zusammen mit überschüssigem Brenngas aus den Brenngasräumen 124 der Brennstoffzelleneinheiten 114 durch die Gasdurchtrittskanäle 210 der abgaskanalseitigen Abstützelemente 200 in die drei Abgaskanäle 214, aus welchen es durch die Abgasabführöffnungen 240, die Abgas-Zweigleitungen 242 und die Abgas-Abführleitung 244 zu der (nicht dargestellten) Abgasbehandlungseinheit abgeführt wird.

Dadurch, daß die Anzahl der Abgaskanäle 214 größer ist als die Anzahl der Brenngaskanäle 216, wird eine besonders gleichmäßige Durchströmung der Brenngasräume 124 zwischen den rippenförmigen Kontaktelementen 132 erzielt und der Strömungswiderstand beim Durchströmen des Kontaktfeldes 134 reduziert.

In der Abgasbehandlungseinheit wird beispielsweise das Reaktionsprodukt (Wasser) aus dem Abgasstrom entfernt, und überschüssiges Brenngas wird zu der Brenngaszufuhr geleitet, um nochmals der Brennstoffzellenvorrichtung 100 zugeführt zu werden.

Das für den Betrieb der Brennstoffzellenvorrichtung 100 benötigte Oxidationsmittel (beispielsweise Luft oder reiner Sauerstoff) wird dem Innenraum des Gehäuses 102 durch die Oxidationsmittel-Zuführleitung 104 zugeführt.

Im Innenraum des Gehäuses 102 verteilt sich das Oxidationsmittel auf die zwischen den Brenngasräumen 124 der Brennstoffzelleneinheiten 114 ausgebildeten Oxidationsmittelräume 130, welche durch jeweils eine Kontaktplatte 118 einer Brennstoffzelleneinheit 114 sowie durch den Fluidführungsrahmen 120 und die Kathode 128 der KAE-Einheit 116 einer benachbarten Brennstoffzelleneinheit 114 umschlossen sind.

In die Oxidationsmittelräume hinein und aus denselben wieder heraus gelangt das Oxidationsmittel durch die Zwischenräume zwischen jeweils einem Fluidführungsrahmen 120 einer Brennstoffzelleneinheit 114 und der Kontaktplatte 118 der in der Stapelrichtung 112 darauffolgenden Brennstoffzelleneinheit 114, soweit diese Zwischenräume nicht durch die Abstützelemente 200, welche die Brenngaskanäle 216 bzw. die Abgaskanäle 214 umgeben, überdeckt sind.

Wie bereits beschrieben, werden aus dem Oxidationsmittel an den Kathoden 128 der KAE-Einheiten 116 der Brennstoffzelleneinheiten 114 Sauerstoffionen gebildet, welche durch die Elektrolyten 126 zu den Anoden 122 der KAE-Einheiten 116 der Brennstoffzelleneinheiten 114 wandern.

Überschüssiges Oxidationsmittel gelangt aus den Oxidationsmittelräumen 130 der Brennstoffzelleneinheiten 114 auf der der Eintrittsseite des Oxidationsmittels gegenüberliegenden Seite hinaus und wird durch die Oxidationsmittel-Abführleitung 105 aus dem Innenraum des Gehäuses 102 der Brennstoffzellenvorrichtung 100 abgeführt.

Die Strömungsrichtung des Brenngases und des Abgases durch die Brennstoffzellenvorrichtung 100 ist in den Zeichnungen mit einfachen Pfeilen 246, die Strömungsrichtung des Oxidationsmittels durch die Brennstoffzellenvorrichtung 100 mittels Doppelpfeilen 248 angegeben.

Die Strömungsrichtung des Oxidationsmittels durch die Oxidationsmittelräume 130 ist im wesentlichen parallel zu der Strömungsrichtung des Brenngases durch die Brenngasräume 124.

Um die längs der Stapelrichtung 112 aufeinanderfolgenden Brennstoffzelleneinheiten 114 durch äußere Verspannung aneinander festzulegen, sind mehrere Verbindungsschrauben 250 (siehe Fig. 2 und 3) vorgesehen, welche Durchgangsbohrungen 252 in der mittleren oberen Endplatte 110 des Brennstoffzellenblockverbunds 106 durchsetzen und an ihrem dem jeweiligen Schraubenkopf 254 abgewandten Ende mit einem Außengewinde 256 versehen sind, welches in jeweils eine Gewindebohrung 258 in der unteren Endplatte 108 des Brennstoffzellenverbunds 106 eingedreht ist, so daß die mittlere obere Endplatte 110 und die untere Endplatte 108 durch die Verbindungsschrauben 250 gegeneinander verspannt werden und eine gewünschte Presskraft über die Endplatten 108, 110 auf den mittigen, die Kontaktfelder 134 umfassenden Bereich des Stapels der Brennstoffzelleneinheiten 114 übertragbar ist (siehe Fig. 2).

Ferner sind mehrere Verbindungsschrauben 260 vorgesehen, welche Durchgangsbohrungen 262 in den seitlichen oberen Endplatten 111 des Brennstoffzellenblockverbunds 106 durchsetzen und an ihrem dem jeweiligen Schraubenkopf 264 abgewandten Ende mit einem Außengewinde 266 versehen sind, welches in jeweils eine Gewindebohrung 268 in der unteren Endplatte 108 eingedreht ist, so daß die seitlichen oberen Endplatten 111 und die untere Endplatte 108 durch die Verbindungsschrauben 260 gegeneinander verspannt sind und eine gewünschte Presskraft über die Endplatten 108, 111 im Bereich der Brenngaskanäle 216 bzw. der Abgaskanäle 214 auf den Stapel der Brennstoffzelleneinheiten 114 übertragbar ist.

Die durch die äußere Verspannung mittels der Verbindungsschrauben 250 und der mittleren oberen Endplatte 110 erzeugte Presskraft bestimmt den Anpressdruck, mit dem die Kontaktelemente 132 gegen das Substrat 121 bzw. gegen die Kathode 128 der angrenzenden KAE-Einheit 116 gepreßt werden.

Der Anpressdruck, mit dem die Abstützelemente 200 und die Gaskanal-Dichtungen 212 gegen die Kontaktplatten 118 und die Fluidführungsrahmen 120 gepreßt werden, wird dagegen - unabhängig von der Verspannung mittels der Verbindungsschrauben 250 und der mittleren oberen Endplatte 110 - ausschließlich durch die äußere Vorspannkraft bestimmt, mit welcher die seitlichen oberen Endplatten 111 mittels der Verbindungsschrauben 260 gegen die untere Endplatte 108 verspannt sind.

Der vorstehend beschriebene Brennstoffzellenblockverbund 106 wird wie folgt montiert:

Zunächst werden die einzelnen Brennstoffzelleneinheiten 114 montiert, indem jeweils ein Substrat 121 mit seinem verdichteten Außenbereich 220 auf einen Fluidführungsrahmen 120 aufgelegt und in der vorstehend beschriebenen Weise durch Verschweißen oder Verlöten, unter Bildung einer gasdichten Zone 224 in dem verdichteten Außenbereich 220, an dem Fluidführungsrahmen 120 festgelegt wird. Anschließend werden auf dem Substrat 121 die Anode 122, der Elektrolyt 126 und die Kathode 128 der KAE-Einheit 116, beispielsweise durch Plasmaspritzen erzeugt, wobei der Elektrolyt 126 in der Weise erzeugt wird, daß er die gasdichte Zone 224 in dem verdichteten Außenbereich 220 des Substrats 121 gasdicht überdeckt, um die Brenngasraum-Dichtung 218 herzustellen.

Anschließend wird die Kontaktplatte 118 der Brennstoffzelleneinheit 114 zur Anlage an der der KAE-Einheit 116 abgewandten Seite des Substrats 121 gebracht, und durch Verschweißen oder Verlöten wird der Verbindungsflansch 170 der Kontaktplatte 118 mit dem Verbindungsflansch 186 des Fluidführungsrahmens 120 gasdicht verbunden.

Darauf wird der Brennstoffzellenverbund 106 aus den einzelnen Brennstoffzelleneinheiten 114 zusammengesetzt, indem die gewünschte Anzahl von Brennstoffzelleneinheiten 114 längs der Stapelrichtung 112 gestapelt wird und die Brennstoffzelleneinheiten 114 mittels der Endplatten 108, 110, 111 und der die Endplatten gegeneinander verspannenden Verbindungsschrauben 250, 260 in ihrer Lage relativ zueinander fixiert werden.

Eine in den Fig. 13 bis 15 dargestellte zweite Ausführungsform einer Brennstoffzellenvorrichtung 100 unterscheidet sich von der vorstehend beschriebenen ersten Ausführungsform lediglich dadurch, daß Abstützelemente 200', welche zwischen der Kontaktplatte 118 und dem Fluidführungsrahmen 120 derselben Brennstoffzelleneinheit 114 angeordnet sind und somit ein Kollabieren des Gehäuses 192 der Brennstoffzelleneinheit 114 unter dem Anpressdruck, unter dem die seitlichen oberen Endplatten 111 und die untere Endplatte 108 gegeneinander verspannt werden, verhindern, nicht als separate Bauteile, sondern vielmehr einstückig mit der Kontaktplatte 118 bzw. mit dem Fluidführungsrahmen 120 ausgebildet sind.

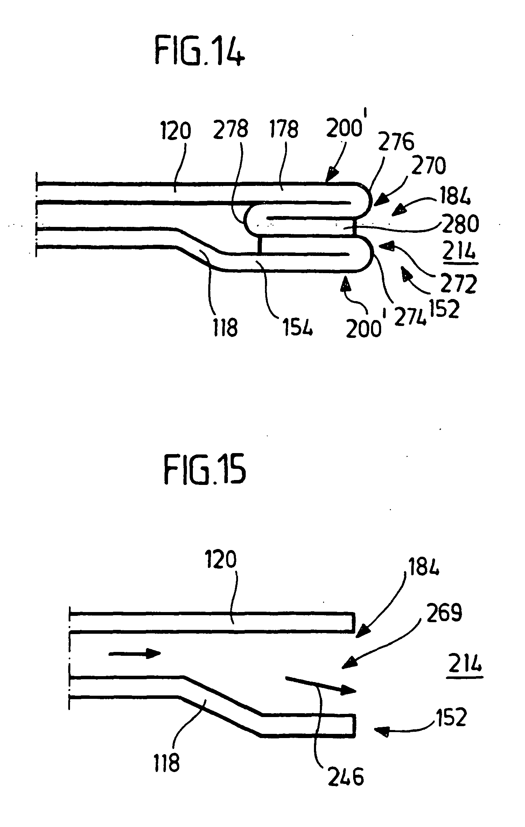

Wie aus den Fig. 13 und 14 zu ersehen ist, sind rings um jeden Abgaskanal 214 mehrere, beispielsweise zehn, Abstützelemente 200' angeordnet, welche in der Umfangsrichtung des Abgaskanals 214 voneinander beabstandet sind, so daß das Abgas aus dem Brenngasraum 124 der betreffenden Brennstoffzelleneinheit 114 durch die Gasdurchlässe 269 bildenden Zwischenräume zwischen den Abstützelementen 200' in den Abgaskanal 214 gelangen kann.

Wie am besten aus der Schnittdarstellung der Fig. 14 zu ersehen ist, umfaßt jedes der Abstützelemente 200' einen oberen Teil 270 und einen unteren Teil 272, wobei der untere Teil 272 einstückig mit der Kontaktplatte 118 ausgebildet ist und einen in die Abgasdurchgangsöffnung 152 überstehenden Randbereich der Kontaktplatte 118 umfaßt, welcher durch Umbiegen längs einer Biegelinie 274 um 180° auf den Randbereich 154 der Kontaktplatte 118 zurückgebogen worden ist.

Der obere Teil 270 des Abstützelements 200' ist einstückig mit dem Fluidführungsrahmen 120 ausgebildet und umfaßt einen in die Abgasdurchgangsöffnung 184 überstehenden Randbereich des Fluidführungsrahmens 120, welcher längs einer ersten Biegelinie 276 um 180° auf den Gasführungsbereich 178 zurückgebogen worden ist und längs einer zweiten Biegelinie 278 um 180° auf sich selbst zurückgebogen worden ist.

Der obere Teil 270 des Abstützelements 200' umfaßt somit zwei übereinander angeordnete Lagen, wobei die untere Lage 280 mit ihrer Unterseite auf der Oberseite des unteren Teils 272 des Abstützelements 200' flächig aufliegt.

Die insgesamt drei Metallblechlagen des Abstützelements 200' bilden somit einen massiven metallischen Körper, welcher durch die auf die Gaskanal-Dichtungen 212 und die Abstützelemente 200' wirkenden Presskräfte im wesentlichen nicht weiter komprimiert werden kann und somit die Kontaktplatte 118 und den Fluidführungsrahmen 120 im Bereich des Abgaskanals 214 auf Abstand voneinander hält und ein Zusammendrücken des Gehäuses 192 der Brennstoffzelleneinheit 114 verhindert.

Den vorstehend beschriebenen Abstützelementen 200' entsprechende Abstützelemente sind auch im Bereich der Brenngaskanäle 216 zwischen der Kontaktplatte 118 und dem Fluidführungsrahmen 120 derselben Brennstoffzelleneinheit 114 angeordnet.

Im übrigen stimmt die zweite Ausführungsform einer Brennstoffzellenvorrichtung 100 hinsichtlich Aufbau und Funktion mit der ersten Ausführungsform überein, auf deren vorstehende Beschreibung insoweit Bezug genommen wird.

## Patentansprüche

1. Brennstoffzelleneinheit, umfassend ein Gehäuse (192), ein Substrat (121) und eine auf einer Elektrodenseite (226) des Substrats (121) angeordnete Elektrode (122), wobei das Substrat (121) so ausgebildet ist, dass es den Durchtritt eines Gases aus einem auf einer Gasraumseite des Substrats (121) angeordneten Gasraum (124) zu der Elektrode (122) erlaubt,
**dadurch gekennzeichnet,**
**dass** das Substrat (121) mindestens eine im wesentlichen gasdichte Zone (224) umfasst, welche sich von einer Oberfläche des Substrats (121) durch das Substrat (121) hindurch zu einer gegenüberliegenden Oberfläche des Substrats (121) erstreckt und durch Schweißen und/oder durch Löten an dem Gehäuse (192) festgelegt ist.

2. Brennstoffzelleneinheit nach Anspruch 1, **dadurch gekennzeichnet, dass** die gasdichte Zone (224) des Substrats (121) gasdicht an das Gehäuse (192) angrenzt.

3. BrennstofFzelleneinheit nach Anspruch 2, **dadurch gekennzeichnet, dass** das Gehäuse (192) ein Blechformteil (120) umfasst und dass die gasdichte Zone (224) an das Blechformteil (120) angrenzt.

4. Brennstoffzelleneinheit nach Anspruch 3, **dadurch gekennzeichnet, dass** das Blechformteil ein Fluidführungselement (120) der Brennstoffzelleneinheit (114) bildet.

5. Brennstoffzelleneinheit nach einem der Ansprüche 1 bis 4, **dadurch gekennzeichnet, dass** das Gehäuse (192) mindestens ein durch spanende Bearbeitung hergestelltes Gehäuseteil umfasst und dass die gasdichte Zone gasdicht an dieses Gehäuseteil angrenzt.

6. Brennstoffzelleneinheit, nach einem der Ansprüche 2 bis 5, **dadurch gekennzeichnet, dass** die gasdichte Zone (224) des Substrats (121) an dem Gehäuse (192) festgelegt ist.

7. Brennstoffzelleneinheit nach Anspruch 6, **dadurch gekennzeichnet, dass** die gasdichte Zone (224) des Substrats (121) durch Laserschweißen und/oder durch Hartlöten an dem Gehäuse (192) festgelegt ist.

8. Brennstoffzelleneinheit nach einem der Ansprüche 2 bis 7, **dadurch gekennzeichnet, dass** die Brennstoffzelleneinheit (114) einen über der Elektrode (122) angeordneten im wesentlichen gasdichten Elektrolyten (226) umfasst und dass die gasdichte Zone (224) des Substrats (121) auf ihrer dem Gehäuse (192) gegenüberliegenden Seite gasdicht an den Elektrolyten (126) angrenzt.

9. Brennstoffzelleneinheit nach Anspruch 8, **dadurch gekennzeichnet, dass** die Brennstoffzelleneinheit (114) einen Dichtungsbereich aus einer Vergussmasse umfasst, welcher an den Elektrolyten (126) und an dem Substrat (121) gasdicht angrenzt.

10. Brennstoffzelleneinheit nach einem der Ansprüche 2 bis 9, **dadurch gekennzeichnet, dass** die Brennstoffzelleneinheit (114) einen über der Elektrode (122) angeordneten im wesentlichen gasdichten Elektrolyten (126) umfasst und dass die Brennstoffzelleneinheit (114) ferner einen Dichtungsbereich umfasst, welcher gasdicht an den Elektrolyten (126) und gasdicht an die gasdichte Zone (224) des Substrats (121) auf deren dem Gehäuse (192) gegenüberliegender Seite angrenzt.

11. Brennstoffzelleneinheit (114) nach einem der Ansprüche 9 oder 10, **dadurch gekennzeichnet, dass** der Dichtungsbereich eine im wesentlichen gasdichte Vergussmasse umfasst.

12. Brennstoffzelleneinheit (114) nach einem der Ansprüche 1 bis 11, **dadurch gekennzeichnet, dass** die gasdichte Zone (224) in einem verdichteten Bereich (220) des Substrats (121) ausgebildet ist.

13. Brennstoffzelleneinheit nach einem der Ansprüche 1 bis 12, **dadurch gekennzeichnet, dass** die gasdichte Zone (224) ringförmig geschlossen ausgebildet ist.

14. Brennstoffzelleneinheit nach Anspruch 13, **dadurch gekennzeichnet, dass** die gasdichte Zone (224) einen gasdurchlässigen Bereich (230) des Substrats (121) umschließt.

15. Brennstoffzelleneinheit nach einem der Ansprüche 1 bis 14, **dadurch gekennzeichnet, dass** sich die gasdichte Zone (224) im wesentlichen parallel zu einem Rand des Substrats (121) erstreckt.

16. Brennstoffzellenblockverbund, umfassend eine Mehrzahl von Brennstoffzelleneinheiten nach einem der Ansprüche 1 bis 15, die längs einer Stapelrichtung (112) aufeinander folgen.

## Claims

1. Fuel cell unit, comprising a housing (192), a substrate (121) and an electrode (122) disposed on an electrode side (226) of the substrate (121), wherein the substrate (121) is constructed in such a way that it allows a gas from a gas compartment (124) disposed on a gas compartment side of the substrate (121) to pass through to the electrode (122),
**characterized in**
**that** the substrate (121) comprises at least one substantially gas-tight zone (224), which extends from one surface of the substrate (121), through the substrate (121) to an opposite surface of the substrate (121)and which is fixed to the housing (192) by welding and/or by soldering.

2. Fuel cell unit according to claim 1, **characterized in that** the gas-tight zone (224) of the substrate (121) adjoins the housing (192) in a gas-tight manner.

3. Fuel cell unit according to claim 2, **characterized in that** the housing (192) comprises a shaped sheet metal part (120) and that the gas-tight zone (224) adjoins the shaped sheet metal part (120).

4. Fuel cell unit according to claim 3, **characterized in that** the shaped sheet metal part forms a fluid-carrying element (120) of the fuel cell unit (114).

5. Fuel cell unit according to any one of claims 1 to 4, **characterized in that** the housing (192) comprises at least one housing part manufactured by a cutting operation and that the gas-tight zone adjoins said housing part in a gas-tight manner.

6. Fuel cell unit according to any one of claims 2 to 5, **characterized in that** the gas-tight zone (224) of the substrate (121) is fixed to the housing (192).

7. Fuel cell unit according to claim 6, **characterized in that** the gas-tight zone (224) of the substrate (121) is fixed by laser welding, and/or by hard-soldering to the housing (192).

8. Fuel cell unit according to any one of claims 2 to 7, **characterized in that** the fuel cell unit (114) comprises a substantially gas-tight electrolyte (226) disposed above the electrode (122) and that the gas-tight zone (224) of the substrate (121) at its opposite side to the housing (192) adjoins the electrolyte (126) in a gas-tight manner.

9. Fuel cell unit according to claim 8, **characterized in that** the fuel cell unit (114) comprises a sealing region made of a setting compound, which adjoins the electrolyte (126) and the substrate (121) in a gas-tight manner.

10. Fuel cell unit according to any one of claims 2 to 9, **characterized in that** the fuel cell unit (114) comprises a substantially gas-tight electrolyte (126) disposed above the electrode (122) and that the fuel cell unit (114) further comprises a sealing region, which in a gas-tight manner adjoins the electrolyte (126) and in a gas-tight manner adjoins the gas-tight zone (224) of the substrate (121) at its opposite side to the housing (192).

11. Fuel cell unit (114) according to either of claims 9 or 10, **characterized in that** the sealing region comprises a substantially gas-tight setting compound.

12. Fuel cell unit (114) according to any one of claims 1 to 11, **characterized in that** the gas-tight zone (224) is formed in a compressed region (220) of the substrate (121).

13. Fuel cell unit according to any one of claims 1 to 12, **characterized in that** the gas-tight zone (224) is of an annular, closed construction.

14. Fuel cell unit according to claim 13, **characterized in that** the gas-tight zone (224) encloses a gas-permeable region (230) of the substrate (121).

15. Fuel cell unit according to any one of claims 1 to 14, **characterized in that** the gas-tight zone (224) extends substantially parallel to an edge of the substrate (121).

16. Fuel cell block, comprising a plurality of fuel cell units according to any one of claims 1 to 15, which are arranged successively along a stacking direction (112).

## Revendications

1. Unité de pile à combustible, comprenant un boîtier (192), un substrat (121) et une électrode (122) disposée sur une face d'électrode (226) du substrat (121), le substrat (121) étant conçu de manière à permettre la traversée d'un gaz depuis une chambre à gaz (124) disposée sur une face de la chambre à gaz du substrat (121) vers l'électrode (122), **caractérisée en ce que** le substrat (121) comprend au moins une zone (224) sensiblement étanche au gaz, qui s'étend depuis une surface du substrat (121) à travers le substrat (121) jusqu'à une surface opposée du substrat (121), et est fixée au boîtier (192) par soudure et/ou par brasage.

2. Unité de pile à combustible selon la revendication 1, **caractérisée en ce que** la zone étanche au gaz (224) du substrat (121) est adjacente au boîtier (192) de manière étanche au gaz.

3. Unité de pile à combustible selon la revendication 2, **caractérisée en ce que** le boîtier (192) comprend une tôle moulée (120) et **en ce que** la zone étanche au gaz (224) est adjacente à la tôle moulée (120).

4. Unité de pile à combustible selon la revendication 3, **caractérisée en ce que** la tôle moulée forme un élément de guidage du fluide (120) de l'unité de pile à combustible (114).

5. Unité de pile à combustible selon l'une des revendications 1 à 4, **caractérisée en ce que** le boîtier (192) comprend au moins une partie de boîtier fabriquée par usinage de copeaux et **en ce que** la zone étanche au gaz est adjacente à cette partie du boîtier de manière étanche au gaz.

6. Unité de pile à combustible selon l'une des revendications 2 à 5, **caractérisée en ce que** la zone étanche au gaz (224) du substrat (121) est fixée au boîtier (192).

7. Unité de pile à combustible selon la revendication 6, **caractérisée en ce que** la zone étanche au gaz (224) du substrat (121) est fixée par soudure au laser et/ou par brasage fort au boîtier (192).

8. Unité de pile à combustible selon l'une des revendications 2 à 7, **caractérisée en ce que** l'unité de pile à combustible (114) comprend un électrolyte (226) sensiblement étanche au gaz, disposé sur l'électrode (122) et **en ce que** la zone étanche au gaz (224) du substrat (121) est adjacente à l'électrolyte (126) sur sa face opposée au boîtier (192) de manière étanche au gaz.

9. Unité de pile à combustible selon la revendication 8, **caractérisée en ce que** l'unité de pile à combustible (114) comprend une zone d'étanchéité constituée d'une matière de scellement qui est adjacente à l'électrolyte (126) et au substrat (121) de manière étanche au gaz.

10. Unité de pile à combustible selon l'une des revendications 2 à 9, **caractérisée en ce que** l'unité de pile à combustible (114) comprend un électrolyte (126) sensiblement étanche au gaz et disposé sur l'électrode (122) et **en ce que** l'unité de pile à combustible (114) comprend en outre une zone d'étanchéité, qui est adjacente à l'électrolyte (126) de manière étanche au gaz et est adjacente à la zone étanche au gaz (224) du substrat (121) sur sa face opposée au boîtier (192) de manière étanche au gaz.

11. Unité de pile à combustible (114) selon l'une des revendications 9 ou 10, **caractérisée en ce que** la zone d'étanchéité comprend une matière de scellement sensiblement étanche au gaz.

12. Unité de pile à combustible (114) selon l'une des revendications 1 à 11, **caractérisée en ce que** la zone étanche au gaz (224), est formée dans une zone étanchéisée (220) du substrat (121).

13. Unité de pile à combustible selon l'une des revendications 1 à 12, **caractérisée en ce que** la zone étanche au gaz (224) prend la forme d'un circuit fermé.

14. Unité de pile à combustible selon la revendication 13, **caractérisée en ce que** la zone étanche au gaz (224) entoure une zone perméable au gaz (230) du substrat (121).

15. Unité de pile à combustible selon l'une des revendications 1 à 14, **caractérisée en ce que** la zone étanche au gaz (224) s'étend sensiblement parallèlement à un bord du substrat (121).

16. Bloc composite de pile à combustible, comprenant une multitude d'unités de pile à combustible selon l'une des revendications 1 à 15, qui se suivent le long d'une direction d'empilement (112).
